# EUROPEAN PATENT APPLICATION

(11) **EP 1 458 123 A1**
(43) Date of publication of application: **15.09.2004**
(21) Application number: 04003762.4
(22) Date of filing: 19.02.2004
(51) Int. Cl.: H04B 17/00, H04Q 7/32

(54) **Apparatus and method for displaying receiving sensitivity in mobile terminal**

(30) Priority: 25.02.2003 KR 2003011663
(71) Applicant: LG Electronics Inc., Seoul (KR)
(72) Inventor: Moon, Sung-Jun, Gyeonggi-Do (KR)
(74) Representative: von Hellfeld, Axel, Dr. Dipl.-Phys.

(57) **Abstract**

A system and method for displaying a receiving sensitivity in a mobile terminal includes a display unit which displays a receiving sensitivity graph indicating a received signal strength at a current direction of the terminal. Also included is a direction measurement unit for periodically measuring a direction of a mobile terminal, a received signal strength indicator for measuring the received signal strength, a memory for storing direction information of a mobile terminal and a corresponding received signal strength, and a control unit for controlling storage of a newly-measured direction of a mobile terminal and a corresponding received signal strength when a direction of the mobile terminal changes. The current direction of the mobile terminal and a corresponding received signal strength may be recorded in memory along with previous position and signal strength information. When simultaneously displayed, a user can easily understand his or her peripheral receiving sensitivity situation and can find the best receiving sensitivity direction.

## Description

### BACKGROUND OF THE INVENTION

### 1. Field of the Invention

The present invention generally relates to mobile communication systems, and more particularly to an apparatus and method for displaying a receiving sensitivity in a mobile terminal.

### 2. Background of the Related Art

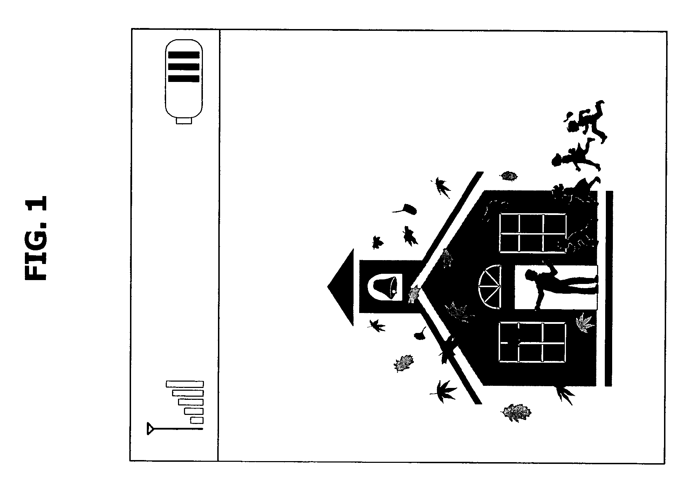

Figure 1 shows a display of a mobile terminal in accordance with the related art. As shown, the terminal displays information indicating a receiving sensitivity at an upper portion of the display. This information is displayed in the form of bars, which are generated in different sizes in ascending order proportional to the receiving signal strength. These bars are called received signal strength indicator bars (RSSI bars), which collectively indicate an RSSI level. This RSSI level (hereinafter called received signal strength) is measured by a received signal strength indicator of the mobile terminal, and is displayed in RSSI bar form on a display unit by a predetermined algorithm operated by a micro-processor.

In the related-art mobile terminal, receiving sensitivity is displayed in very simple form using RSSI bars, and only receiving sensitivity for a user's (or a mobile terminal's) current state (direction and location) is displayed. A need therefore exists for an improved system and method for generating an indication of receiving sensitivity for display on a mobile terminal or other device operating within a wireless communication system.

### SUMMARY OF THE INVENTION

An object of the invention is to solve at least the above problems and/or disadvantages and to provide at least the advantages described hereinafter.

Another object of the present invention is to provide an improved system and method for generating an indication of receiving signal sensitivity for display on a mobile terminal or other device operating within a wireless communication system.

Another object of the present invention is to provide a method and apparatus for displaying receiving signal sensitivity in a mobile terminal, which displays direction information of the mobile terminal and received signal strength information for the direction information.

To achieve these and other advantages and in accordance with the purpose of the present invention, as embodied and broadly described herein, there is provided an apparatus for displaying a receiving sensitivity in a mobile terminal which in accordance with one embodiment comprises a display unit for displaying a predetermined receiving sensitivity graph, a direction measurement unit for periodically measuring a direction of a mobile terminal, a received signal strength indicator for measuring a received signal strength, a memory for storing direction information of a mobile terminal and a corresponding received signal strength, and a control unit for storing a newly-measured direction of a mobile terminal and a received signal strength in the memory when a direction of the mobile terminal is varied, and at the same time for reflecting them on a receiving sensitivity graph.

Preferably, the control unit stores a newly-measured direction and a received signal strength in the memory when a direction of a mobile terminal is varied and a direction conversion angle is more than a threshold. Preferably, the display unit displays a received signal strength indicator bar. Preferably, the receiving sensitivity graph displays a direction of a mobile terminal and a corresponding receiving signal strength with a predetermined angle on a horizontal axis denoting the east and the west and a vertical axis denoting the south and the north.

In accordance with another embodiment of the present invention, a method for displaying a receiving sensitivity in a mobile terminal comprises periodically checking a direction of a mobile terminal, measuring a received signal strength of a new direction when a direction of the mobile terminal is varied, storing a new direction and a received signal strength of the mobile terminal in a memory, and reflecting not only the existing information inside the memory but also a new direction and a received signal strength of the mobile terminal on a receiving sensitivity graph of a display unit.

Preferably, the step of measuring a received signal strength comprises the steps of: checking whether a direction conversion angle is more than a threshold or not when a direction of the mobile terminal is varied; and measuring a received signal strength of the varied direction when the angle is more than the threshold.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

Figure 1 is a drawing showing a related-art display unit of a mobile terminal.
Figure 2 is a construction view of a mobile terminal according to one embodiment of the present invention.
Figure 3 is a drawing showing a display unit of the mobile terminal according to one embodiment of the present invention.
Figures 4A, 4B, and 4C are graphs showing examples of a receiving sensitivity according to the present invention.
Figures 5A, 5B, and 5C are drawings showing direction information and a received signal strength on a receiving sensitivity graph when a direction of a mobile terminal is varied.
Figure 6 is a flow chart showing a method for displaying a receiving sensitivity according to one embodiment of the present invention.

### DETAILED DESCRIPTION OF PREFERRED EMBODIMENTS

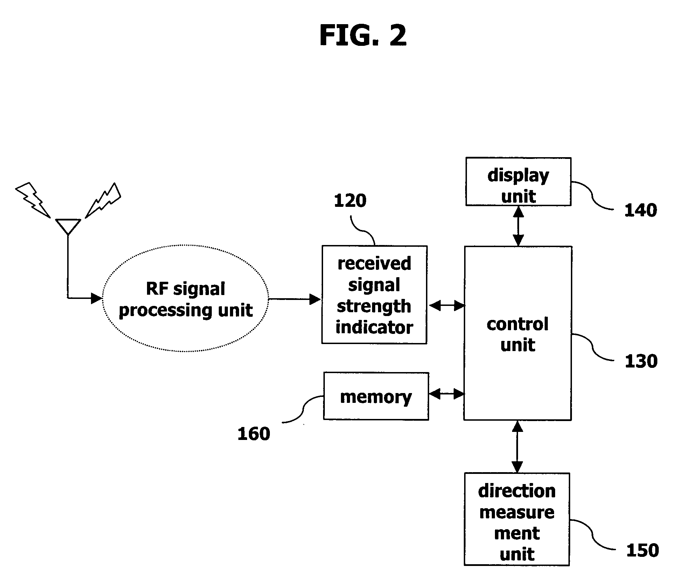

Figure 2 shows an apparatus for displaying a receiving sensitivity in a mobile terminal according to one embodiment of the present invention. This apparatus comprises a display unit 140 for displaying a predetermined receiving sensitivity graph, a direction measurement unit 150 for periodically measuring a direction of a mobile terminal, a received signal strength indicator 120 for measuring a received signal strength; a memory 160 for storing direction information of a mobile terminal and a corresponding received signal strength, and a control unit 130 for storing a newly-measured direction of a mobile terminal and a received signal strength in the memory 160 when a direction of the mobile terminal is varied, and at the same time reflecting them on the receiving sensitivity graph. Control unit 130 stores a newly-measured direction and a received signal strength in the memory when a direction of a mobile terminal varies and a direction conversion angle exceeds a predetermined threshold.

The apparatus for displaying a receiving sensitivity in a mobile terminal according to the present invention preferably stores a direction of a mobile terminal and a received signal strength in the direction of memory 160 whenever a direction of the mobile terminal varies. The apparatus further displays a receiving sensitivity of a mobile terminal in graph form, and reflects information that has been recorded in the memory 160 (direction and received signal strength) on the graph whenever a direction of the mobile terminal varies.

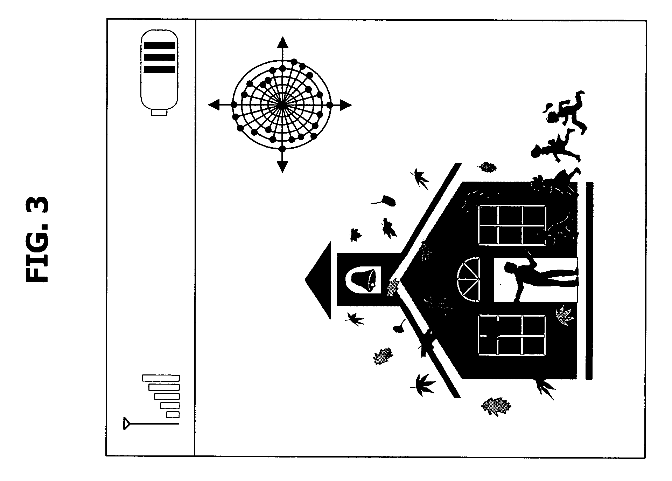

Figure 3 shows a display unit of a mobile terminal according to one embodiment of the present invention. Through a receiving sensitivity graph of the display unit, a user can determine which direction has the best receiving sensitivity.

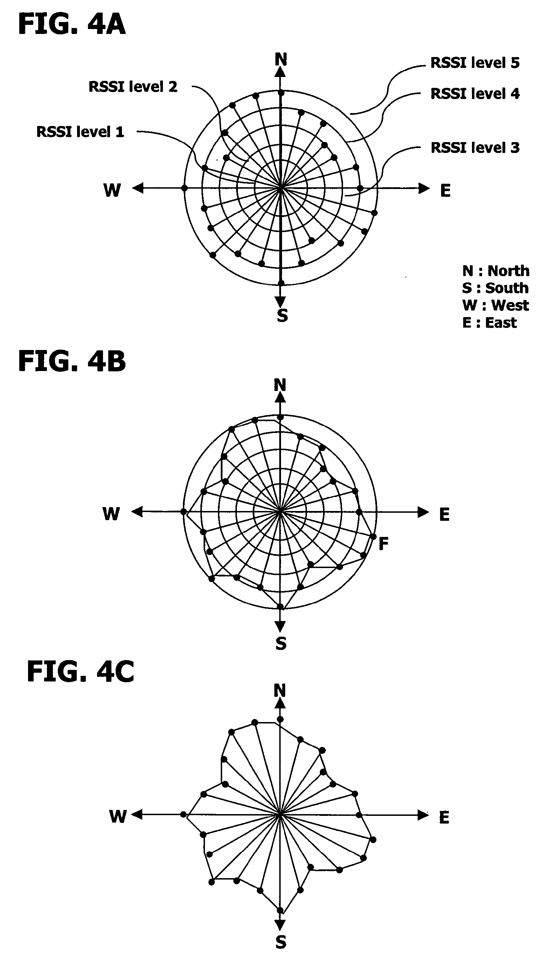

Figures 4A, 4B, and 4C are graphs showing examples of how receiving sensitivity may be expressed according to various embodiments of the present invention. Display unit 140 of the mobile terminal can display receiving sensitivity in these various forms. A more detailed description of these figures is provided below.

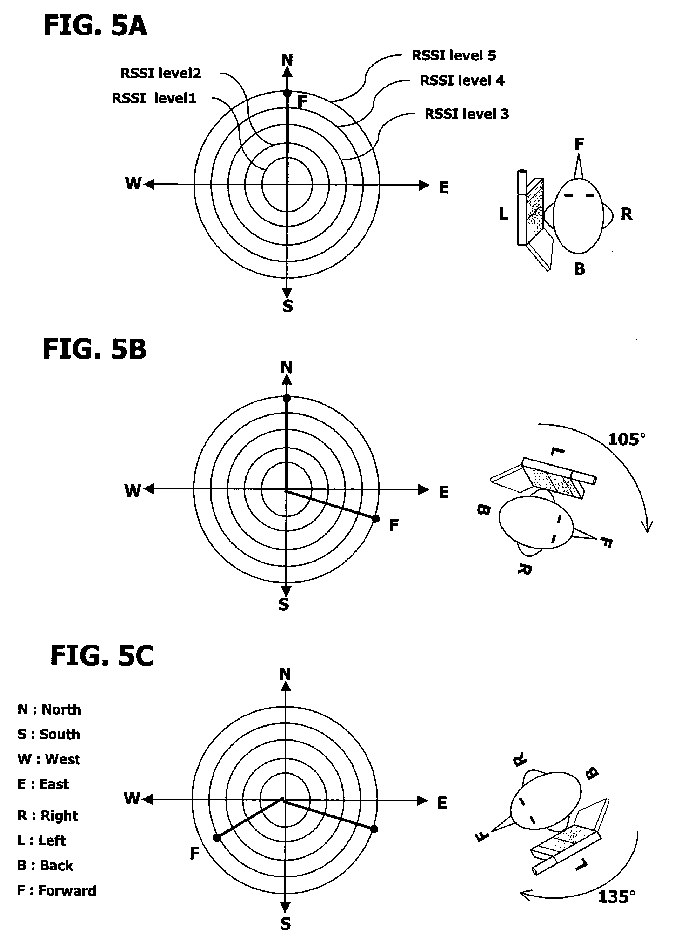

Figures 5A, 5B, and 5C are drawings showing direction information and received signal strengths on receiving sensitivity graphs when a direction of a mobile terminal is varied. More specifically, Figure 5A shows a receiving sensitivity graph which corresponds to the case where a front side of a mobile terminal is oriented towards the north. Figure 5B shows a receiving sensitivity graph which corresponds to the case where a direction of the mobile terminal is rotated clockwise by 105° relative to the position in Figure 5A. Figure 5C shows a receiving sensitivity graph which corresponds to the case where a direction of the mobile terminal is rotated clockwise by an additional 135° relative to the position in Figure 5B. For illustrative purposes, receiving signal strength is shown to remain the same in the positions of Figures 5A and 5B in spite of the directional change. In other situations, this signal strength may change when the terminal is rotated. This is shown, for example, in Figure 5C where the signal strength has diminished from RSSI Level 5 to RSSI Level 4 relative to the signal strengths in Figures 5A and 5B. See also, Figures 4A-4C.

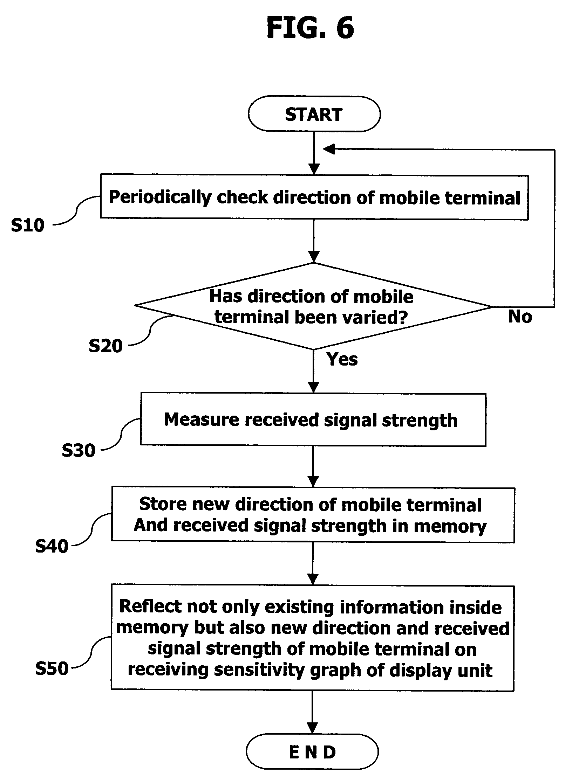

Figure 6 is a flow chart showing steps included in a method for displaying a receiving sensitivity according to one embodiment of the present invention. The method comprises periodically checking a direction of a mobile terminal (S10), measuring a received signal strength of a new direction when a direction of the mobile terminal is varied (S20, S30), storing a new direction and a received signal strength of the mobile terminal in a memory (S40), and reflecting not only the existing information stored in the memory but also a new direction and a received signal strength of the mobile terminal on a receiving sensitivity graph of a terminal display unit (S50).

Referring to Figures 2 and 6, operation of the apparatus for displaying a receiving sensitivity according to one embodiment of the present invention will be explained as follows.

Control unit 130 monitors the direction measurement unit 150, and checks a direction variance of the mobile terminal (S10). That is, the control unit checks an output value of the direction measurement unit for measuring a direction of the mobile terminal with a predetermined period.

When a direction conversion angle exceeds a threshold value (S20), the control unit obtains a received signal strength which has been measured by received signal strength indicator 120 (S30) and then stores measured information (direction and received signal strength) in memory 160 (S40). While the threshold is considered to be an optional feature of the invention, it may be very beneficial for some applications. For example, setting a threshold value for a direction conversion of the mobile terminal will prevent displaying receiving sensitivity repeatedly for minute movements of the mobile terminal. This translates into improved readability and convenience to the terminal user. On the contrary, when the direction conversion angle of the mobile terminal is less than the threshold value, the control unit discards the measured information.

Whenever new information is updated in memory 160, the control unit preferably undergoes a predetermined process to reflect information that has been stored in memory 160 on a receiving sensitivity graph of the display unit 140 (S50). The predetermined process may be one that converts information stored in the memory into a radial straight line on the receiving sensitivity graph. More specifically, on the receiving sensitivity graph, the length of a straight line radially extending from a point of intersection between a vertical axis (e.g., south and north) and a horizontal axis (e.g., east and west) may represent a received signal strength, and a direction of the radial straight line may represent a current direction of a mobile terminal (Refer to Figures 4A-4C).

Processes (S20-S50) may be repeated whenever a direction of the mobile terminal is varied, so that not only information for past movements (directions and strengths of received signals) is stored, but also newly updated information (directions and strengths of received signals) is continuously stored in memory 160. Also, the control unit preferably provides the information to a user through the display unit, thereby making the user orient the mobile terminal towards the best receiving sensitivity direction and thus providing an improved calling service to the user.

The present invention is also a computer-readable medium that stores a program for measuring signal sensitivity of a mobile terminal. The program may include code sections for performing each of the respective operations described above. For example, the program may include a first code section which controls a detector to measure a current direction and received signal strength of the mobile terminal, and a second code section which controls a display to display the current direction and received signal strength on the terminal. Additional code sections may be included for performing other functions and/or embodiments of the present invention. The computer-readable medium may be any known including but not limited to an integrated circuit chip incorporated within the housing of the mobile terminal.

As aforementioned, the present invention is a system and method that determines and provides a visual indication of a direction of a mobile terminal and a received signal strength in that direction to a user whenever a direction of the mobile terminal is varied. The visual indication may be in the form of a graph as previously discussed, or another visual indication may be generated and displayed to a user. These other visual indications may include other graphical representations, textual representations, or combined graphical and textural representations of the direction and/or receiving signal strength of the mobile terminal in that direction. By taking these measures, more useful and substantial receiving sensitivity information is provided to the user.

Also, in the present invention, a direction of a mobile terminal and a received signal strength in that direction are recorded in memory whenever a direction of the mobile terminal is varied. All or a portion of the recorded information stored in the memory may then be displayed. As a result, the user can easily understand his or her peripheral receiving sensitivity situation, and can find the best receiving sensitivity direction faster.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A mobile terminal, comprising:
a memory;
a display unit;
a direction measurement unit which periodically measures a direction of the mobile terminal;
a received signal strength indicator which measures a received signal strength; and
a controller which controls the memory to store a newly-measured direction of the mobile terminal and a corresponding received signal strength when the mobile changes direction, and controls the display unit to display a receiving sensitivity graph which indicates the newly measured direction and corresponding signal strength.

2. The terminal of claim 1, wherein the controller controls the memory to store the newly-measured direction and corresponding received signal strength when a direction conversion angle of the terminal changes by more than a predetermined threshold value relative to a previous direction of the terminal.

3. The terminal of claim 1, wherein the receiving sensitivity graph displays the newly measured direction and corresponding received signal strength of the mobile terminal and at least one of a previous direction and received signal strength of the terminal recorded in the memory.

4. The terminal of claim 1, wherein the display unit displays a received signal strength indicator bar.

5. The terminal of claim 1, wherein the receiving sensitivity graph displays the newly measured direction of the mobile terminal and corresponding receiving signal strength with a predetermined angle on a horizontal axis denoting east and west directions and a vertical axis denoting south and north directions.

6. A method for displaying a receiving sensitivity in a mobile terminal, comprising:
periodically checking a direction of a mobile terminal;
measuring a received signal strength of a new direction when the mobile terminal changes direction;
storing information indicative of the new direction and received signal strength in a memory; and
displaying a receiving sensitivity graph which includes the new direction and received signal strength of the terminal.

7. The method of claim 6, wherein measuring the received signal strength comprises:
checking whether a direction conversion angle exceeds a threshold value when the mobile terminal changes direction; and
measuring a received signal strength of the changed direction when the angle exceeds the threshold value.

8. The method of claim 6, wherein the receiving sensitivity graph also displays at least one of a previous direction and signal strength of the terminal.

9. A method, comprising:
measuring a current direction and received signal strength of a mobile terminal; and
displaying the current direction and received signal strength on the terminal.

10. The method of claim 9, wherein said measuring includes:
taking a difference between the current direction and a previous direction of the terminal;
comparing the difference to a threshold value; and
measuring the received signal strength only when the difference exceeds the threshold value.

11. The method of claim 9, further comprising:
taking a difference between the current direction and a previous direction of the terminal;
comparing the difference to a threshold value, wherein the current direction and received signal strength are displayed only when the difference exceeds the threshold value.

12. The method of claim 9, wherein said displaying includes:
displaying the current direction and received signal strength in a graph.

13. The method of claim 12, wherein the graph includes a pointer which
indicates the current direction of the terminal.

14. The method of claim 13, wherein a length of the pointer indicates the received signal strength of the terminal in the current direction.

15. The method of claim 9, wherein said displaying further includes:
displaying at least one of a previous direction and received signal strength of the terminal.

16. The method of claim 15, wherein said at least one of a previous direction and received signal strength are displayed simultaneously with the current direction and received signal strength.

17. The method of claim 9, wherein said displaying includes:
displaying a graph having a first data point representing the current direction and received signal strength and a plurality of additional data points representing previous directions and corresponding received signal strengths.

18. The method of claim 17, wherein the first and additional data points are connected to form an area graph which provides a visual indication of a direction in which a strongest received signal strength exists for the terminal.

19. The method of claim 9, wherein said displaying includes:
displaying an area graph at least partially based on the current direction and signal strength,
wherein the area graph includes a peak which indicates a direction in which a strongest received signal strength exists for the terminal.

20. The method of claim 19, wherein the current direction and received signal strength is different from the strongest received signal strength.

21. A method, comprising:
measuring received signal strengths of a mobile terminal in a plurality of directions; and
displaying the received signal strengths in said directions simultaneously on the terminal.

22. The method of claim 21, wherein said displaying includes:
displaying an area graph representing the received signal strengths in said directions.

23. The method of claim 22, wherein said displaying includes:
identifying a current direction and received signal strength of the terminal on the graph.

24. A mobile terminal, comprising:
a detector that detects a current direction and received signal strength of the terminal; and
a display which displays the current direction and received signal strength detected by the terminal.

25. The terminal of claim 24, further comprising:
a controller which computes a difference between the current direction and a previous direction of the terminal, compares the difference to a threshold value, and activates the detector to detect the received signal strength only when the difference exceeds the threshold value.

26. The terminal of claim 24, further comprising:
a controller which computes a difference between the current direction and a previous direction of the terminal and compares the difference to a threshold value, wherein the display displays the current direction and received signal strength only when the difference exceeds the threshold value.

27. The terminal of claim 24, wherein the display displays a graph which includes the current direction and received signal strength.

28. The terminal of claim 27, wherein the graph includes a pointer which indicates the current direction of the terminal.

29. The terminal of claim 28, wherein a length of the pointer indicates the received signal strength of the terminal in the current direction.

30. The terminal of claim 24, wherein the display displays at least one of a previous direction and received signal strength of the terminal.

31. The terminal of claim 30, wherein said at least one of a previous
direction and received signal strength are displayed simultaneously with the current direction and received signal strength.

32. The terminal of claim 24, wherein the display displays a graph having a first data point representing the current direction and received signal strength and a plurality of additional data points representing previous directions and corresponding received signal strengths.

33. The terminal of claim 32, wherein the first and additional data points are connected to form an area graph which provides a visual indication of a direction in which a strongest received signal strength exists for the terminal.

34. The terminal of claim 24, wherein the display displays an area graph which is at least partially based on the current direction and signal strength, and wherein the area graph includes a peak which indicates a direction in which a strongest received signal strength exists for the terminal.

35. The terminal of claim 34, wherein the current direction and received signal strength is different from the strongest received signal strength.

36. A mobile terminal, comprising:
a detector which detects received signal strengths of a mobile terminal in a plurality of directions; and
a display which displays the received signal strengths in said directions simultaneously on the terminal.

37. The terminal of claim 36, wherein the display displays an area graph representing the received signal strengths in said directions.

38. The terminal of claim 37, wherein the display displays information identifying a current direction and received signal strength of the terminal on the graph.

39. A computer-readable medium storing a program for measuring signal sensitivity for a mobile terminal, said program comprising:
a first code section which controls a detector to measure a current direction and received signal strength of the mobile terminal; and
a second code section which controls a display to display the current direction and received signal strength on the terminal.

40. The computer-readable medium of claim 39, wherein the medium is an integrated circuit chip.
